# DEMANDE DE BREVET EUROPEEN

(11) **EP 2 863 353 A1**
(43) Date de publication de la demande: **22.04.2015**
(21) Numéro de dépôt: 13306410.5
(22) Date de dépôt: 15.10.2013
(51) Int. Cl.: G06Q 20/40

(54) **Carte de paiement comportant un cryptogramme visuel**

(71) Demandeur: Gemalto SA, 92190 Meudon (FR)
(72) Inventeur: Dubois, Denis, 92190 Meudon (FR); Dubrois, Jacques, 92190 Meudon (FR); Labourie, Florent, 92190 Meudon (FR); Martin, Pierre, 92190 Meudon (FR)
(74) Mandataire: Cour, Pierre

(57) **Abrégé**

La présente invention concerne une carte de paiement (1) comportant un cryptogramme visuel (9) et un dispositif de dissimulation (7) dudit cryptogramme visuel (9). Le dispositif de dissimulation (9) comporte de l'encre thermo-chromique. L'invention concerne également un procédé de fabrication d'une telle carte de paiement (1).

## Description

La présente demande concerne le domaine des cartes de paiement et plus particulièrement la sécurisation du cryptogramme visuel inscrit sur la carte de paiement elle-même.

Dans le cadre de transaction électronique en ligne, notamment sur des sites internet, le paiement peut être effectué au moyen des numéros de la carte de paiement couplé avec un cryptogramme visuel, généralement un code à trois chiffres, présent au dos de ladite carte de paiement.

Le cryptogramme visuel est généralement inscrit en clair au dos de la carte de paiement et peut être obtenu uniquement par contact visuel avec afin d'éviter que toutes les informations nécessaires pour effectuer des transactions électronique, telles que le numéro et la date de validité de la carte de paiement ainsi que l'identité du titulaire de ladite carte de paiement, soit regroupée au sein de moyen de stockage tel qu'une bande magnétique et/ou une puce électronique. Ainsi un fraudeur, ayant obtenue par un quelconque moyen le numéro et la date de validité de la carte de paiement ainsi que l'identité du titulaire de ladite carte de paiement, peut simplement obtenir le cryptogramme visuel via un contact visuel ou prise de vue de ce dernier.

Ainsi, un des buts de l'invention est de remédier au moins partiellement aux inconvénients de l'art antérieur et de proposer une carte de paiement avec un cryptogramme visuel sécurisé ainsi que son procédé de fabrication.

Ainsi, la présente concerne une carte de paiement comportant un cryptogramme visuel, ladite carte de paiement comportant un dispositif de dissimulation dudit cryptogramme visuel, ledit dispositif de dissimulation comportant de l'encre thermo-chromique.

La présence du dispositif de dissimulation du cryptogramme visuel 9, permet de sécuriser l'accès à ce dernier. En effet pour pouvoir visualiser le cryptogramme visuel, il n'est plus seulement nécessaire de regarder la carte de paiement, il faut dorénavant pouvoir la manipuler et réchauffer l'encre thermo-chromique afin de faire apparaitre le cryptogramme visuel.

Selon un mode de réalisation préféré, l'encre thermo-chromique peut être choisie de sorte que sa température de changement de couleur soit supérieure à la température moyenne de la zone géographique dans laquelle ladite carte est destinée à être utilisée. L'encre thermo-chromique peut avoir une température de changement de couleur comprise entre 27 et 33°C.

Selon un mode particulier de réalisation, le dispositif de dissimulation peut être une impression à l'encre thermo-chromique opaque en dessous de sa température de changement de couleur et recouvrant le cryptogramme visuel préalablement imprimé, ladite encre thermo-chromique devenant translucide lors du dépassement de sa température de changement de couleur. Le dispositif de dissimulation peut être un autocollant comportant une encre thermo-chromique opaque en dessous de sa température de changement de couleur et devenant translucide lors du dépassement de sa température de changement de couleur. L'autocollant comportant une encre thermo-chromique peut être fixé de façon permanente.

Selon un autre mode de réalisation de l'invention, le dispositif de dissimulation peut être un fond réalisé en encre thermo-chromique ayant, en dessous de sa température de changement de couleur, une couleur identique à la celle du cryptogramme visuel imprimé sur ledit fond, ladite encre thermo-chromique passant de sa couleur en dessous de sa température de changement de couleur à une couleur contrastante par rapport à la couleur de l'impression du cryptogramme visuel lors du dépassement de sa température de changement de couleur.

Le dispositif de dissimulation peut être un fond coloré réalisé sur la carte de paiement et le cryptogramme visuel est réalisé en encre thermo-chromique ayant une couleur en dessous de sa température de changement de couleur identique à la celle dudit fond, ladite encre thermo-chromique passant de sa couleur en dessous de sa température de changement de couleur à une couleur contrastante par rapport à la couleur du fond lors du dépassement de sa température de changement de couleur.

La présente invention concerne également un procédé de fabrication d'une carte de paiement comportant un cryptogramme de sécurité ledit procédé comportant une étape de mise en place d'un dispositif de dissimulation dudit cryptogramme visuel, ledit dispositif de dissimulation comportant de l'encre thermo-chromique.

Selon un mode préféré de réalisation, l'étape de mise en place d'un dispositif de dissimulation dudit cryptogramme visuel peut être une étape d'impression d'une encre thermo-chromique opaque en dessous de sa température de changement de couleur et recouvrant le cryptogramme visuel préalablement imprimé, ladite encre thermo-chromique devenant translucide lors du dépassement de sa température de changement de couleur.

Selon un autre mode de réalisation, l'étape de mise en place d'un dispositif de dissimulation dudit cryptogramme visuel peut être une étape d'application, sur ledit cryptogramme visuel préalablement imprimé, d'un autocollant comportant une encre thermo-chromique opaque en dessous de sa température de changement de couleur et devenant translucide lors du dépassement de sa température de changement de couleur.

Selon un autre mode de réalisation, l'étape de mise en place d'un dispositif de dissimulation dudit cryptogramme visuel peut comporter :
- une première étape d'impression d'un fond coloré en encre thermo-chromique ayant, en dessous de sa température de changement de couleur, une couleur opaque, et
- une seconde étape d'impression, sur le dit fond coloré, du cryptogramme visuel d'une couleur identique à la couleur du fond coloré en dessous de la température de changement de couleur de l'encre thermo-chromique.

Ladite encre thermo-chromique peut passer à une couleur contrastante par rapport à la couleur de l'impression du cryptogramme visuel lors du dépassement de sa température de changement de couleur.

Selon un autre mode de réalisation, l'étape de mise en place d'un dispositif de dissimulation dudit cryptogramme visuel peut comporter :
- une première étape d'impression d'un fond coloré sur la carte de paiement, et
- une seconde étape d'impression, sur le fond coloré, dudit cryptogramme visuel en encre thermo-chromique ayant une couleur en dessous de sa température de changement de couleur identique à la celle dudit fond,

Ladite encre thermo-chromique peut passer de sa couleur à température ambiante à une couleur contrastante par rapport à la couleur du fond lors du dépassement de sa température de changement de couleur.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique de la face arrière d'une carte de paiement avec le cryptogramme visuel dissimulé,
- la figure 2 montre une représentation schématique de la face arrière de la carte de paiement de la figure 1 avec le cryptogramme visuel révélé.

Les éléments identiques sur toutes les figures sont indiqués par les mêmes numéros de références.

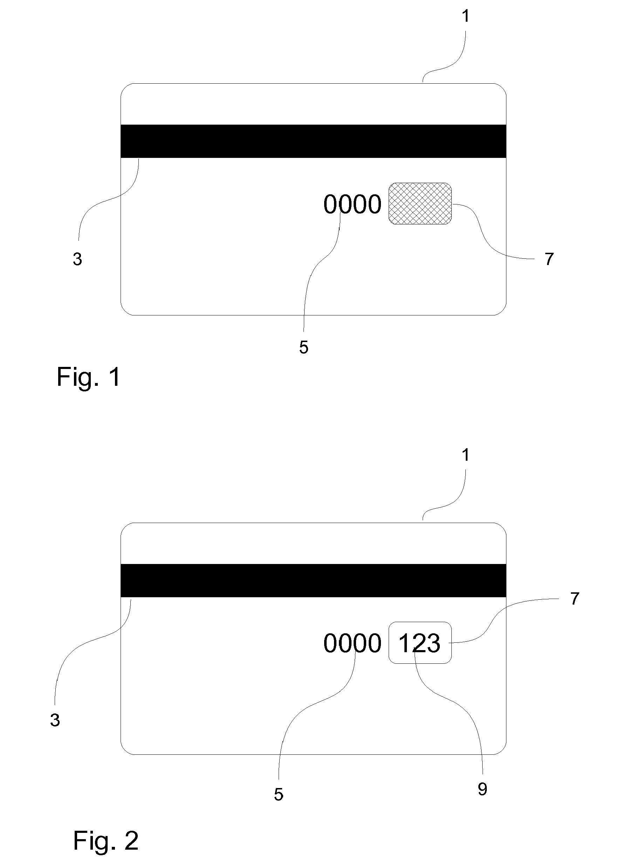

Les figures 1 et 2 montrent une représentation schématique d'une face arrière d'une carte de paiement 1. Cette face arrière de la carte de paiement 1 peut comporter une bande magnétique 3 ainsi que des informations numériques 5. Sur la face avant (non représentée) de la carte de paiement 1 peut figurer le numéro de la carte de paiement 1(généralement composé de seize chiffres), le nom et prénom du titulaire ainsi que la date de validité de ladite carte de paiement 1.

La carte de paiement 1 comporte également un cryptogramme visuel 9 inscrit généralement sur sa face arrière. Ce cryptogramme visuel 9 est utilisé comme moyen de sécurité afin d'identifier la carte de paiement 1 lors de transactions électroniques en ligne en complément des informations telles que le numéro et la date de validité de la carte de paiement 1 ainsi que l'identité du titulaire. La carte de paiement 1 comporte également un dispositif de dissimulation 7 afin de cacher par défaut le cryptogramme visuel 9.

Le dispositif de dissimulation 7 comporte plus particulièrement de l'encre thermo-chromique. Cette encre thermo-chromique dissimule par défaut le cryptogramme visuel 9 et, afin de révéler ce dernier, une action positive de l'utilisateur est nécessaire. Cette action est notamment un échauffement de ladite encre thermo-chromique afin que cette dernière change de couleur et ainsi révèle le cryptogramme visuel 9. Cette action peut ainsi être par exemple l'apposition du doigt de l'utilisateur sur la zone ou le cryptogramme visuel 9 est inscrit.

Les encres thermo-chromiques sont des encres pouvant avoir au moins deux états ou deux teintes en fonction de la température. En dessous d'une température de transition, une encre thermo chromique présente une première teinte. Au dessus de la température de transition l'encre prend une deuxième teinte. Pour certaines encres, le changement d'état de l'encre se fait entre un état transparent et un état opaque.

L'encre thermo-chromique est avantageusement choisie de sorte que sa température de changement de couleur soit supérieure à la température moyenne de la zone géographique dans laquelle ladite carte est destinée à être utilisée. En effet, les zones géographiques équatoriales et tropicales ont une température moyenne élevée et donc l'encre thermo-chromique utilisée pour un dispositif de dissimulation 7 dans ces zones devra avoir une température de changement de couleur plus élevée que celle d'une encre thermo-chromique dans une zone géographique plus tempérée où la température moyenne est plus faible. Cette encre thermo-chromique est réversible, c'est-à-dire que lorsque sa température repasse en dessous de sa température de changement de couleur, ladite encre thermo-chromique reprend sa couleur d'origine.

De préférence et afin que le changement de couleur de l'encre thermo-chromique s'effectue grâce à la chaleur corporelle de l'utilisateur, notamment un de ses doigts, l'encre thermo-chromique utilisée a une température de changement de couleur comprise entre 27 et 33°C.

Afin d'augmenter le temps de retour à une couleur de l'encre thermo-chromique dissimulant le cryptogramme visuel 9, il peut être avantageux d'utiliser une encre avec une température de changement de couleur relativement basse (tout en restant suffisamment haute pour ne pas changer de couleur uniquement à température ambiante). Ainsi, lorsqu'un titulaire confie sa carte pour un paiement dans un commerce, restaurant ou autre et que le commerçant ou serveur s'absente avec votre carte pour par exemple aller à la borne de paiement, il est possible de vérifier si quelqu'un a tenté de visualiser son cryptogramme visuel, ce dernier étant toujours visible au retour de la carte et du commerçant ou serveur.

Selon un premier mode de réalisation, le dispositif de dissimulation 7 est une impression à l'encre thermo-chromique, opaque en dessous de sa température de changement de couleur, recouvrant le cryptogramme visuel 9 préalablement imprimé sur la carte de paiement 1. Lors du dépassement de sa température de changement de couleur l'encre thermo-chromique devient translucide et révèle le cryptogramme visuel 9.

Selon un second mode de réalisation, le dispositif de dissimulation 7 est un autocollant comportant une encre thermo-chromique opaque en dessous de sa température de changement de couleur. De même que précédemment, lors du dépassement de sa température de changement de couleur l'encre thermo-chromique devient translucide et donc l'autocollant également et révèle ainsi le cryptogramme visuel 9. Afin de garder un niveau de sécurité satisfaisant, l'autocollant comportant une encre thermo-chromique est avantageusement fixé sur la carte de paiement 1 de façon permanente.

Selon un troisième mode de réalisation, le dispositif de dissimulation est un fond réalisé en encre thermo-chromique sur la carte de paiement. En dessous de sa température de changement de couleur, l'encre thermo-chromique a une couleur identique à la celle du cryptogramme visuel 9 imprimé sur ledit fond. De ce fait, en dessous de la température de changement de couleur de l'encre thermo-chromique, le cryptogramme visuel 9 et le fond se confonde et ledit cryptogramme visuel 9 est invisible.

Lors du dépassement de sa température de changement de couleur, l'encre thermo-chromique du fond passe à une couleur contrastante par rapport à la couleur de l'impression du cryptogramme visuel, ce dernier est ainsi révélé.

Selon un quatrième mode de réalisation, le dispositif de dissimulation est un fond coloré réalisé sur la carte de paiement. Le cryptogramme visuel est imprimé sur ledit fond et est réalisé en encre thermo-chromique ayant une couleur, en dessous de sa température de changement de couleur, identique à la celle dudit fond. De ce fait, en dessous de la température de changement de couleur de l'encre thermo-chromique, le cryptogramme visuel 9 et le fond se confonde et ledit cryptogramme visuel 9 est invisible.

Lors du dépassement de sa température de changement de couleur, l'encre thermo-chromique du cryptogramme visuel passe à une couleur contrastante par rapport à la couleur de l'impression du fond, ledit cryptogramme visuel est ainsi révélé.

La présente invention concerne également un procédé de fabrication d'une carte de paiement 1 comportant un dispositif de dissimulation 7 du cryptogramme visuel 9.

Le procédé de fabrication de la carte de paiement 1 est standard et connu de l'homme du métier jusqu'aux étapes de personnalisation graphique de la carte de paiement 1, c'est-à-dire où les éléments tels que le numéro, la date de validité de la carte de paiement 1, identité du titulaire et cryptogramme de sécurité sont inscrits sur la carte de paiement 1.

Le procédé de fabrication comprend ainsi une étape de mise en place d'un dispositif de dissimulation 7 du cryptogramme visuel 9, ledit dispositif de dissimulation 7 comportant de l'encre thermo-chromique.

Selon un premier mode de réalisation, l'étape de mise en place d'un dispositif de dissimulation 7 du cryptogramme visuel 9 est une étape d'impression d'une encre thermo-chromique opaque en dessous de sa température de changement de couleur sur la carte de paiement 1. Cette impression recouvre le cryptogramme visuel 9 préalablement imprimé. Lors du dépassement de sa température de changement de couleur l'encre thermo-chromique devient translucide et révèle le cryptogramme visuel 9.

Selon un second mode de réalisation, l'étape de mise en place d'un dispositif de dissimulation 7 du cryptogramme visuel 9 est une étape d'application, sur ledit cryptogramme visuel 9 préalablement imprimé, d'un autocollant comportant une encre thermo-chromique opaque en dessous de sa température de changement de couleur.

Lors du dépassement de sa température de changement de couleur l'encre thermo-chromique devient translucide et donc l'autocollant également et révèle ainsi le cryptogramme visuel 9. Afin de garder un niveau de sécurité satisfaisant, l'autocollant comportant une encre thermo-chromique est avantageusement fixé sur la carte de paiement 1 de façon permanente.

Selon un troisième mode de réalisation, l'étape de mise en place d'un dispositif de dissimulation 7 du cryptogramme visuel 9 comporte :
- une première étape d'impression d'un fond coloré en encre thermo-chromique ayant, en dessous de sa température de changement de couleur, une couleur opaque, et
- une seconde étape d'impression, sur le dit fond coloré, du cryptogramme visuel 9 d'une couleur identique à la couleur du fond coloré en dessous de sa température de changement de couleur.

L'encre thermo-chromique utilisée passe à une couleur contrastante par rapport à la couleur de l'impression du cryptogramme visuel 9 lors du dépassement de sa température de changement de couleur.

Selon un quatrième mode de réalisation, l'étape de mise en place d'un dispositif de dissimulation 7 du cryptogramme visuel 9 comporte :
- une première étape d'impression d'un fond coloré sur la carte de paiement, ce fond est réalisé avec une encre standard, et
- une seconde étape d'impression, sur le fond coloré, du cryptogramme visuel 9 en encre thermo-chromique ayant une couleur en dessous de sa température de changement de couleur identique à la celle dudit fond,

L'encre thermo-chromique utilisée passe de sa couleur à température ambiante à une couleur contrastante par rapport à la couleur du fond lors du dépassement de sa température de changement de couleur.

Ainsi, on voit bien que grâce à la présence du dispositif de dissimulation 7 du cryptogramme visuel 9, l'accès à ce dernier est sécurisé. En effet pour pouvoir visualiser le cryptogramme visuel 9, il n'est plus seulement nécessaire de regarder la carte de paiement 1, il faut dorénavant pouvoir la manipuler et réchauffer l'encre thermo-chromique afin de faire apparaitre le cryptogramme visuel 9.

## Revendications

1. Carte de paiement (1) comportant un cryptogramme visuel (9), **caractérisée en ce qu'**elle comporte un dispositif de dissimulation (7) dudit cryptogramme visuel (9), ledit dispositif de dissimulation (9) comportant de l'encre thermo-chromique.

2. Carte de paiement (1) selon la revendication 1, dans laquelle l'encre thermo-chromique est choisie de sorte que sa température de changement de couleur soit supérieure à la température moyenne de la zone géographique dans laquelle ladite carte de paiement (1) est destinée à être utilisée.

3. Carte de paiement (1) selon la revendication 1, dans laquelle l'encre thermo-chromique utilisée a une température de changement de couleur comprise entre 27 et 33°C.

4. Carte de paiement (1) selon la revendication 1, dans laquelle le dispositif de dissimulation (7) est une impression à l'encre thermo-chromique opaque en dessous de sa température de changement de couleur et recouvrant le cryptogramme visuel (9) préalablement imprimé, ladite encre thermo-chromique devenant translucide lors du dépassement de sa température de changement de couleur.

5. Carte de paiement (1) selon la revendication 1, dans laquelle le dispositif de dissimulation (7) est un autocollant comportant une encre thermo-chromique opaque en dessous de sa température de changement de couleur et devenant translucide lors du dépassement de sa température de changement de couleur.

6. Carte de paiement (1) selon la revendication 3, dans laquelle l'autocollant comportant une encre thermo-chromique est fixé de façon permanente.

7. Carte de paiement (1) selon la revendication 1, dans laquelle le dispositif de dissimulation (7) est un fond réalisé en encre thermo-chromique ayant, en dessous de sa température de changement de couleur, une couleur identique à la celle du cryptogramme visuel (9) imprimé sur ledit fond, ladite encre thermo-chromique passant de sa couleur en dessous de sa température de changement de couleur à une couleur contrastante par rapport à la couleur de l'impression du cryptogramme visuel (9) lors du dépassement de sa température de changement de couleur.

8. Carte de paiement (1) selon la revendication 1, dans laquelle le dispositif de dissimulation (7) est un fond coloré réalisé sur la carte de paiement (1) et en ce que ledit cryptogramme visuel (9) est réalisé en encre thermo-chromique ayant une couleur en dessous de sa température de changement de couleur identique à la celle dudit fond, ladite encre thermo-chromique passant de sa couleur en dessous de sa température de changement de couleur à une couleur contrastante par rapport à la couleur du fond lors du dépassement de sa température de changement de couleur.

9. Procédé de fabrication d'une carte de paiement (1) comportant un cryptogramme de sécurité (9), **caractérisé en ce que** ledit procédé comporte une étape de mise en place d'un dispositif de dissimulation (7) dudit cryptogramme visuel (9), ledit dispositif de dissimulation comportant de l'encre thermo-chromique.

10. Procédé de fabrication selon la revendication 9, dans lequel l'étape de mise en place d'un dispositif de dissimulation (7) dudit cryptogramme visuel (9) est une étape d'impression d'une encre thermo-chromique opaque en dessous de sa température de changement de couleur et recouvrant le cryptogramme visuel (9) préalablement imprimé, ladite encre thermo-chromique devenant translucide lors du dépassement de sa température de changement de couleur.

11. Procédé de fabrication selon la revendication 9, dans lequel l'étape de mise en place d'un dispositif de dissimulation (7) dudit cryptogramme visuel (9) est une étape d'application, sur ledit cryptogramme visuel (9) préalablement imprimé, d'un autocollant comportant une encre thermo-chromique opaque en dessous de sa température de changement de couleur et devenant translucide lors du dépassement de sa température de changement de couleur.

12. Procédé de fabrication selon la revendication 9, dans lequel l'étape de mise en place d'un dispositif de dissimulation (7) dudit cryptogramme visuel (9) comporte :
- une première étape d'impression, sur la carte de paiement (1), d'un fond coloré en encre thermo-chromique ayant, en dessous de sa température de changement de couleur, une couleur opaque, et
- une seconde étape d'impression, sur le dit fond coloré, du cryptogramme visuel (9) d'une couleur identique à la couleur du fond coloré en dessous de la température de changement de couleur de l'encre thermo-chromique,
et dans lequel ladite encre thermo-chromique passe à une couleur contrastante par rapport à la couleur de l'impression du cryptogramme visuel (9) lors du dépassement de sa température de changement de couleur.

13. Procédé de fabrication selon la revendication 9, dans lequel l'étape de mise en place d'un dispositif de dissimulation (7) dudit cryptogramme visuel (9) comporte :
- une première étape d'impression d'un fond coloré sur la carte de paiement (1), et
- une seconde étape d'impression, sur le fond coloré, dudit cryptogramme visuel (9) en encre thermo-chromique ayant une couleur en dessous de sa température de changement de couleur identique à la celle dudit fond,
et dans lequel ladite encre thermo-chromique passe de sa couleur à température ambiante à une couleur contrastante par rapport à la couleur du fond lors du dépassement de sa température de changement de couleur.
